# EUROPEAN PATENT APPLICATION

(11) **EP 4 175 000 A1**
(43) Date of publication of application: **03.05.2023**
(21) Application number: 21831906.9
(22) Date of filing: 22.06.2021
(51) Int. Cl.: H01M 10/0566, H01M 50/193, H01M 50/198

(54) **NONAQUEOUS ELECTROLYTE CELL SEALING AGENT, NONAQUEOUS ELECTROLYTE CELL SEALING AGENT COMPOSITION, AND NONAQUEOUS ELECTROLYTE CELL**

(30) Priority: 30.06.2020 JP 2020113463
(71) Applicant: Zeon Corporation, Tokyo 100-8246 (JP)
(72) Inventor: MAEDA ,Kouichirou, Tokyo 100-8246 (JP)
(74) Representative: Maiwald GmbH
(86) International application number: PCT/JP2021/023683
(87) International publication number: WO 2022/004501

(57) **Abstract**

Provided is a sealant for a non-aqueous electrolyte solution battery that can form a sealant layer having excellent adhesiveness with respect to a metal surface. The sealant for a non-aqueous electrolyte solution battery contains a non-polar polymer and a nitrogen-containing heterocyclic compound. The proportional content of the nitrogen-containing heterocyclic compound is preferably not less than 0.01 mass% and not more than 5 mass%.

## Description

### TECHNICAL FIELD

The present disclosure relates to a sealant for a non-aqueous electrolyte solution battery, a sealant composition for a non-aqueous electrolyte solution battery, and a non-aqueous electrolyte solution battery.

### BACKGROUND

Lithium ion secondary batteries are widely used as power supplies for small electronic devices such as notebook computers and mobile telephones. In addition, lithium ion secondary batteries have also been used for automotive applications in recent years.

An electrolyte solution containing an organic solvent (hereinafter, also referred to as a "non-aqueous electrolyte solution") is typically used in a lithium ion secondary battery from viewpoints such as ensuring sufficient electromotive force.

In the case of a non-aqueous electrolyte solution battery (hereinafter, also referred to simply as a "battery") in which such a non-aqueous electrolyte solution is used, a high level of hermetic sealing is required in order to prevent water infiltrating to inside of the battery and to prevent the electrolyte solution from leaking.

In a battery such as a lithium ion secondary battery, for example, power generating elements of the battery are housed in a metal container in order to achieve hermetic sealing, and it is necessary for there to be electrical insulation between a positive electrode terminal and a negative electrode terminal in order to prevent short-circuiting of positive and negative electrodes. An insulating gasket formed of an electrically insulating material such as a resin is normally used in an opening of the metal container in which the power generating elements are housed in order to provide electrical insulation between the positive and negative electrodes and hermetic sealing.

Such an insulating gasket may be used in combination with a sealant in order to further strengthen hermetic sealing through the insulating gasket (for example, refer to Patent Literature (PTL) 1 and 2). In this technique, a composition (sealant composition) containing the sealant is applied onto the insulating gasket or the metal container in order to form a sealant layer. This can increase the level of hermetic sealing as a result of the sealant layer being interposed between the insulating gasket and the metal container when the insulating gasket is fitted into the metal container. Rubber materials such as ethylene-propylene-diene rubber (EPDM), butyl rubber, and diene rubber are used as sealants.

### CITATION LIST

### Patent Literature

PTL 1: JP-H10-321200A
PTL 2: JP5974748B2

### SUMMARY

### (Technical Problem)

However, there is room for improvement of a sealant layer formed using a sealant according to the conventional technique described above in terms of adhesiveness with respect to a metal surface of a metal container or the like.

Accordingly, one object of the present disclosure is to provide a sealant for a non-aqueous electrolyte solution battery and a sealant composition for a non-aqueous electrolyte solution battery that can form a sealant layer having excellent adhesiveness with respect to a metal surface.

Another object of the present disclosure is to provide a non-aqueous electrolyte solution battery having excellent hermetic sealing.

### (Solution to Problem)

The inventor conducted diligent investigation with the aim of solving the problem set forth above. The inventor discovered that by using a sealant that contains a non-polar polymer and a compound having a heterocyclic structure containing nitrogen (i.e., a nitrogen-containing heterocyclic compound), it is possible to form a sealant layer having excellent adhesiveness with respect to a metal surface, and, in this manner, completed the present disclosure.

Specifically, the present disclosure aims to advantageously solve the problem set forth above, and a presently disclosed sealant for a non-aqueous electrolyte solution battery comprises a non-polar polymer and a nitrogen-containing heterocyclic compound. In the case of a sealant for a non-aqueous electrolyte solution battery that contains a non-polar polymer and a nitrogen-containing heterocyclic compound in this manner, it is possible to form a sealant layer having excellent adhesiveness with respect to a metal surface.

In the presently disclosed sealant for a non-aqueous electrolyte solution battery, proportional content of the nitrogen-containing heterocyclic compound is preferably not less than 0.01 mass% and not more than 5 mass%. When the proportional content of the nitrogen-containing heterocyclic compound in the sealant for a non-aqueous electrolyte solution battery is within the specific range set forth above, adhesiveness of a formed sealant layer with respect to a metal surface can be further improved.

In the presently disclosed sealant for a non-aqueous electrolyte solution battery, the nitrogen-containing heterocyclic compound preferably includes one or more selected from the group consisting of a triazole compound, a thiazole compound, and a triazine compound. When the nitrogen-containing heterocyclic compound includes at least one of the three types of compounds set forth above, adhesiveness of a formed sealant layer with respect to a metal surface can be further improved.

In the presently disclosed sealant for a non-aqueous electrolyte solution battery, the non-polar polymer preferably includes one or more selected from the group consisting of a diene rubber, a butyl rubber, and an ethylene-propylene-diene rubber. When the non-polar polymer includes at least one of the three types of polymers set forth above, adhesiveness of a formed sealant layer with respect to a metal surface can be further improved.

Moreover, the present disclosure aims to advantageously solve the problem set forth above, and a presently disclosed sealant composition for a non-aqueous electrolyte solution battery comprises: any one of the sealants for a non-aqueous electrolyte solution battery set forth above; and an organic solvent. In the case of a sealant composition for a non-aqueous electrolyte solution battery that contains any one of the sealants for a non-aqueous electrolyte solution battery set forth above and an organic solvent in this manner, it is possible to form a sealant layer having excellent adhesiveness with respect to a metal surface.

Furthermore, the present disclosure aims to advantageously solve the problem set forth above, and a presently disclosed non-aqueous electrolyte solution battery comprises a sealant layer formed using the sealant composition for a non-aqueous electrolyte solution battery set forth above. The presently disclosed non-aqueous electrolyte solution battery has excellent hermetic sealing as a result of being sealed well by a sealant layer that has been formed using the sealant composition for a non-aqueous electrolyte solution battery set forth above.

### (Advantageous Effect)

According to the present disclosure, it is possible to provide a sealant for a non-aqueous electrolyte solution battery and a sealant composition for a non-aqueous electrolyte solution battery that can form a sealant layer having excellent adhesiveness with respect to a metal surface.

Moreover, according to the present disclosure, it is possible to provide a non-aqueous electrolyte solution battery having excellent hermetic sealing.

### DETAILED DESCRIPTION

The following provides a detailed description of embodiments of the present disclosure.

The presently disclosed sealant for a non-aqueous electrolyte solution battery (hereinafter, also referred to simply as a "sealant") can suitably be used for sealing a non-aqueous electrolyte solution battery. For example, the presently disclosed sealant for a non-aqueous electrolyte solution battery can be dissolved in an organic solvent to thereby suitably produce the presently disclosed sealant composition for a non-aqueous electrolyte solution battery (hereinafter, also referred to simply as a "sealant composition"). Moreover, by using the presently disclosed sealant composition, it is possible to form a sealant layer that can display excellent adhesiveness with respect to a metal surface. Furthermore, a feature of the presently disclosed non-aqueous electrolyte solution battery is that it includes a sealant layer formed using the presently disclosed sealant composition.

### (Sealant for non-aqueous electrolyte solution battery)

A feature of the presently disclosed sealant for a non-aqueous electrolyte solution battery is that it contains a non-polar polymer and a nitrogen-containing heterocyclic compound. The presently disclosed sealant is capable of forming a sealant layer that can display excellent adhesiveness with respect to a metal surface of a metal container, or the like, that is used in a battery. For example, by using a sealant composition that is produced by dissolving the presently disclosed sealant in an organic solvent, it is possible to form a sealant layer having excellent adhesiveness with respect to a metal surface. In addition, a sealant layer formed using the presently disclosed sealant can display excellent adhesiveness with respect to a resin surface of a resin insulating gasket or the like.

Note that the presently disclosed sealant may optionally further contain components other than the aforementioned non-polar polymer and nitrogen-containing heterocyclic compound (i.e., other components).

### <Non-polar polymer>

The non-polar polymer is a polymer that does not include a polar group such as an acidic group. The non-polar polymer is a component that can display excellent adhesiveness in a sealant layer that is formed using the sealant. Moreover, as a result of the non-polar polymer having a low tendency to dissolve in a non-aqueous electrolyte solution, it is possible to sufficiently increase durability of a formed sealant layer against a non-aqueous electrolyte solution (also referred to as "electrolyte solution resistance") by using the non-polar polymer in the sealant.

The non-polar polymer may be a conjugated diene polymer; an isobutylene polymer; an ethylene-propylene rubber (copolymer of ethylene and propylene; also abbreviated as "EPM"); an ethylene-propylene-diene rubber (copolymer of ethylene, propylene, and a non-conjugated diene; also abbreviated as "EPDM"); or the like, for example.

A conjugated diene polymer is a polymer that is obtained through polymerization of a conjugated diene compound. Note that an isobutylene polymer described below is not considered to be included among conjugated diene polymers.

Examples of conjugated diene polymers that are non-polar polymers include homopolymers of a conjugated diene compound; copolymers of an aromatic vinyl compound (for example, styrene) and a conjugated diene compound; and hydrogenated products of these polymers.

Examples of conjugated diene compounds include, but are not specifically limited to, butadiene (1,3-butadiene), isoprene, 2,3-dimethyl-1,3-butadiene, 1,3-pentadiene, 2-methyl-1,3-pentadiene, 1,3-hexadiene, and 4,5-dimethyl-1,3-octadiene. One of these conjugated diene compounds may be used individually, or two or more of these conjugated diene compounds may be used in combination.

No specific limitations are placed on the method by which the conjugated diene polymer is produced. The method of polymerization may be emulsion polymerization or solution polymerization, for example. Moreover, the polymerization reaction may be radical polymerization, anionic polymerization, or the like, for example.

The weight-average molecular weight (Mw) of the conjugated diene polymer is preferably not less than 50,000 and not more than 500,000. Note that the "weight-average molecular weight (Mw)" can be determined as a polystyrene-equivalent amount by GPC (Gel Permeation Chromatography).

An isobutylene polymer is a polymer that is obtained through polymerization of isobutylene.

Examples of isobutylene polymers that are non-polar polymers include homopolymers of isobutylene; copolymers of isobutylene and a conjugated diene compound (for example, butyl rubber (IIR), which is a copolymer of isobutylene and isoprene); and copolymers of isobutylene and an aromatic vinyl compound (for example, styrene).

Note that in a case in which the non-polar polymer described above is a copolymer, the non-polar polymer may be a random copolymer or may be a block copolymer.

Moreover, one of the non-polar polymers described above may be used individually, or two or more of the non-polar polymers described above may be used as a mixture in a freely selected ratio in the presently disclosed sealant.

The non-polar polymer is preferably a thermosetting conjugated diene polymer (also referred to as a "diene rubber") such as a homopolymer of isoprene (also referred to as "polyisoprene" or "isoprene rubber"), a homopolymer of 1,3-butadiene (also referred to as "polybutadiene" or "butadiene rubber"), or a styrene-butadiene copolymer (styrene-butadiene rubber); butyl rubber (IIR); or ethylene-propylene-diene rubber (EPDM) from a viewpoint of further improving adhesiveness of a formed sealant layer with respect to a metal surface, and is particularly preferably EPDM from a viewpoint of improving electrolyte solution resistance of a sealant layer.

The proportional content of the non-polar polymer in the sealant is preferably 85 mass% or more, more preferably 86 mass% or more, and even more preferably 87 mass% or more, and is preferably 99.99 mass% or less, more preferably 99.9 mass% or less, even more preferably 99.8 mass% or less, further preferably 99.5 mass% or less, and even further preferably 99.2 mass% or less. When the proportional content of the non-polar polymer in the sealant is within any of the specific ranges set forth above, adhesiveness of a formed sealant layer with respect to a metal surface can be further improved.

### <Nitrogen-containing heterocyclic compound>

The nitrogen-containing heterocyclic compound is a compound having a heterocyclic structure that includes a nitrogen atom. As a result of the presently disclosed sealant containing the nitrogen-containing heterocyclic compound in addition to the non-polar polymer described above, a sealant layer that is formed using the sealant can display excellent adhesiveness with respect to a metal surface.

The heterocyclic structure of the nitrogen-containing heterocyclic compound is not specifically limited but, from a viewpoint of further improving adhesiveness of a formed sealant layer with respect to a metal surface, is preferably a 5-membered ring or a 6-membered ring, and is more preferably a 6-membered ring.

The number of nitrogen atoms included in the heterocyclic structure of the nitrogen-containing heterocyclic compound is also not specifically limited but, from a viewpoint of further improving adhesiveness of a formed sealant layer with respect to a metal surface, is preferably not less than 1 and not more than 3, and more preferably 3.

The nitrogen-containing heterocyclic compound may also include a sulfur atom. For example, it is preferable that the nitrogen-containing heterocyclic compound includes a thiol group (-SH) from a viewpoint of further improving adhesiveness of a formed sealant layer with respect to a metal surface. The number of thiol groups included in the nitrogen-containing heterocyclic compound is preferably not less than 1 and not more than 3, and more preferably 1.

The nitrogen-containing heterocyclic compound may, for example, be a pyrrole compound, a pyrazole compound, an imidazole compound, a thiazole compound, a triazole compound, a triazine compound, a thiadiazole compound, a thiazoline compound, a thiourea compound, or the like.

A pyrrole compound is a compound that includes a pyrrole ring. Specific examples of pyrrole compounds include pyrrole and carbazole.

A pyrazole compound is a compound that includes a pyrazole ring. Specific examples of pyrazole compounds include pyrazole and 1,2-benzopyrazole.

An imidazole compound is a compound that includes an imidazole ring. Specific examples of imidazole compounds include imidazole, 2-aminoimidazole, benzimidazole, and 2-mercapto-1-methylimidazole.

A thiazole compound is a compound that includes a thiazole ring. Specific examples of thiazole compounds include thiazole, 2-aminothiazole, benzothiazole, 2-aminobenzothiazole, and 2-mercaptobenzothiazole.

A triazole compound is a compound that includes a triazole ring. Specific examples of triazole compounds include 1,2,3-triazole, 1,2,4-triazole, 3-amino-1,2,4-triazole, 1,2,3-benzotriazole (benzotriazole), alkyl-1,2,3-benzotriazole, 2,3-naphthotriazole, alkyl-1,2,3-naphtholtriazole, 5-methyl-1H-benzotriazole (tolyltriazole), and 3-mercapto-1,2,4-triazole.

A triazine compound is a compound that includes a triazine ring.

For example, a triazine thiol compound that includes a triazine ring and a thiol group can be used as a triazine compound.

Specific examples of triazine thiol compounds include triazine monothiol compounds having a structure in which one thiol group is bonded relative to one triazine ring (for example, 1,3,5-triazine-2-thiol); triazine dithiol compounds having a structure in which two thiol groups are bonded relative to one triazine ring (for example, 1,3,5-triazine-2,4-dithiol); and triazine trithiol compounds having a structure in which three thiol groups are bonded relative to one triazine ring (for example, 1,3,5-triazine-2,4,6-trithiol).

A thiadiazole compound is a compound that includes a thiadiazole ring. Specific examples of thiadiazole compounds include 2,5-dimercaptothiadiazole.

A thiazoline compound is a compound that includes a thiazoline ring. Specific examples of thiazoline compounds include 2-mercaptothiazoline.

Any thiourea compound that has a heterocyclic structure can be used as a thiourea compound without any specific limitations. For example, ethylene thiourea, trimethylene thiourea, phenylene thiourea, or the like can be used.

Note that one of the heterocyclic compounds described above may be used individually, or two or more of the heterocyclic compounds described above may be used as a mixture in a freely selected ratio.

Of the nitrogen-containing heterocyclic compounds described above, it is preferable to use a triazole compound, a thiazole compound, or a triazine compound, more preferable to use a triazine compound, and even more preferable to use a triazine thiol compound from a viewpoint of further improving adhesiveness of a formed sealant layer with respect to a metal surface, and it is particularly preferable to use a triazine monothiol compound from a viewpoint of improving electrolyte solution resistance of a formed sealant layer.

The proportional content of the nitrogen-containing heterocyclic compound in the sealant is preferably 0.01 mass% or more, more preferably 0.1 mass% or more, even more preferably 0.2 mass% or more, further preferably 0.5 mass% or more, even further preferably 0.8 mass% or more, and particularly preferably 1 mass% or more, and is preferably 5 mass% or less, more preferably 4 mass% or less, even more preferably 3 mass% or less, and particularly preferably 2 mass% or less. When the proportional content of the nitrogen-containing heterocyclic compound in the sealant is within any of the specific ranges set forth above, adhesiveness of a sealant layer formed using the sealant with respect to a metal surface can be further improved.

### <Other components>

The presently disclosed sealant may optionally further contain other components besides the non-polar polymer and nitrogen-containing heterocyclic compound described above.

Examples of other components that can be contained in the sealant include various compounding agents such as colorants, stabilizers, dispersants, and ultraviolet absorbers that are typically used in the resin industry.

Note that the proportional content of other components in the sealant can be set as not less than 0 mass% and not more than 10 mass%, for example, but is not specifically limited thereto.

### <Production method of sealant>

The presently disclosed sealant can be produced by mixing the above-described non-polar polymer, nitrogen-containing heterocyclic compound, and other components that are used as necessary by a known method.

### (Sealant composition for non-aqueous electrolyte solution battery)

The presently disclosed sealant composition contains the sealant set forth above and an organic solvent. In other words, the presently disclosed sealant composition is a composition in which a sealant containing a non-polar polymer, a nitrogen-containing heterocyclic compound, various compounding agents that are used as necessary, and so forth is dissolved or dispersed in an organic solvent.

The presently disclosed sealant composition can form a sealant layer having excellent adhesiveness with respect to a metal surface. For example, the presently disclosed sealant composition may be applied onto a desired surface of a metal container, insulating gasket, or the like to form a coating film and then this coating film may be dried to thereby form a sealant layer having excellent adhesiveness with respect to a metal surface.

The concentration of the sealant in the sealant composition is preferably 1 mass% or more, more preferably 2 mass% or more, and even more preferably 5 mass% or more, and is preferably 40 mass% or less, more preferably 30 mass% or less, and even more preferably 20 mass% or less. When the concentration of the sealant in the sealant composition is not less than any of the lower limits set forth above, excessive reduction of viscosity of the sealant composition can be inhibited, and sufficient thickness of a coating film of the sealant composition and of a sealant layer can be ensured. On the other hand, when the concentration of the sealant in the sealant composition is not more than any of the upper limits set forth above, excessive increase of viscosity of the sealant composition can be inhibited, and non-uniformity of thickness of a coating film of the sealant composition and of a sealant layer can be reduced.

The organic solvent used in the sealant composition is not specifically limited and may, for example, be an aromatic hydrocarbon compound such as benzene, toluene, or xylene; a saturated aliphatic or alicyclic hydrocarbon compound such as n-hexane, cyclohexane, methylcyclohexane, ethylcyclohexane, nonane, decane, decalin, tetralin, or dodecane; a hydrocarbon mixture such as gasoline or industrial gasoline; or the like.

The presently disclosed sealant composition can be produced by, for example, producing the presently disclosed sealant set forth above in advance, adding the organic solvent to this sealant, and then causing dissolution or dispersion by a known method. Alternatively, various components (non-polar polymer, nitrogen-containing heterocyclic compound, etc.) used for producing the sealant may be directly added to the organic solvent and then be dissolved or dispersed by a known method to thereby produce the presently disclosed sealant composition without producing the presently disclosed sealant in advance.

### (Non-aqueous electrolyte solution battery)

A feature of the presently disclosed non-aqueous electrolyte solution battery is that it includes a sealant layer formed using the presently disclosed sealant composition set forth above. The presently disclosed non-aqueous electrolyte solution battery has excellent hermetic sealing as a result of a sealant layer that has been formed using the presently disclosed sealant composition being included therein as a member for sealing the battery.

For example, the presently disclosed non-aqueous electrolyte solution battery may include a sealant layer formed using the presently disclosed sealant composition set forth above that is provided between a metal container that houses power generating elements and an insulating gasket that is fitted into an opening of the metal container. Moreover, a sealant layer that is formed using the presently disclosed sealant composition set forth above may be provided not only between the insulating gasket and the metal container, but also between the insulating gasket and a sealing body.

The metal container, power generating elements, insulating gasket, and sealing body that are used in the non-aqueous electrolyte solution battery can be any of those that are typically used.

The metal material used for the metal container may, for example, be stainless steel that is surface plated with nickel (Ni) or the like.

The power generating elements are inclusive of an electrolyte, active materials for a positive electrode and for a negative electrode, a separator, and so forth. An electrolyte solution containing a supporting electrolyte and a non-aqueous electrolyte solution solvent is used as the electrolyte.

The supporting electrolyte that is a constituent of the electrolyte solution in the non-aqueous electrolyte solution battery may be a lithium compound such as LiPF₆, LiBF₄, or LiClO₄, for example. Moreover, the non-aqueous electrolyte solution solvent may be a flammable organic compound such as propylene carbonate (PC), ethylene carbonate (EC), or diethyl carbonate (DEC), for example.

The insulating gasket is preferably a gasket that is formed of a polyolefin resin such as polyethylene, polypropylene, or ethylene-copolymerized polypropylene from a viewpoint of durability against electrolyte solution.

The sealant layer that is included in the presently disclosed non-aqueous electrolyte solution battery can be formed, for example, by the following procedure.

First, a specific amount of the presently disclosed sealant composition set forth above is supplied to and applied onto the surface of the metal container and/or the surface of the insulating gasket by a metering pump such as an air-driven metering dispenser, a roller pump, or a gear pump. After this application, the sealant composition is naturally dried or dried using a heating device while maintaining a horizontal state to prevent non-uniformity of the sealant composition, and thus the organic solvent is removed from a coating film of the sealant composition to thereby form a sealant layer.

Note that the application method is not limited to being a method in which a metering pump is used, and application may be carried out by hand using a brush for a small amount. In a case in which a heating device is used to perform drying, the organic solvent can normally be removed from the coating film to obtain a sealant layer through drying at a temperature of not lower than 30°C and not higher than 150°C for a drying time of not less than 5 minutes and not more than 180 minutes.

The thickness of the sealant layer that is formed by the method described above can be freely selected depending on the size of the metal container and the insulating gasket and is normally not less than 0.1 µm and not more than 1,000 µm. When the thickness of the sealant layer is not less than the lower limit set forth above, it is possible to inhibit a phenomenon in which problems such as leakage of electrolyte solution and infiltration of moisture occur and/or in which the sealant layer is severed as a result of the sealant layer having insufficient thickness. Moreover, when the thickness of the sealant layer is not more than the upper limit set forth above, it is possible to inhibit a phenomenon in which formation of the sealant layer becomes difficult due to the sealant layer being excessively thick.

The sealant layer that is formed by the method described above contains at least a non-polar polymer and a nitrogen-containing heterocyclic compound. In other words, the sealant layer contains at least the presently disclosed sealant set forth above. Consequently, this sealant layer can display excellent adhesiveness with respect to a metal surface. Note that a small amount of the organic solvent that was contained in the sealant composition may remain in the sealant layer to the extent that the desired effects are obtained.

The presently disclosed non-aqueous electrolyte solution battery is preferably a lithium ion secondary battery but is not specifically limited thereto.

### EXAMPLES

The following describes the present disclosure through examples. However, the present disclosure is not limited to these examples. Note that "parts" in the present examples are by mass unless otherwise specified.

Moreover, the adhesiveness of a sealant layer and the hermetic sealing of a battery were evaluated by the following methods in the examples and comparative examples. Furthermore, a diene rubber that was used in Examples 5 and 6 and a styrene-isoprene-styrene block copolymer (SIS) that was used in Examples 2, 3, 5, and 6 were produced in accordance with the following polymerization examples.

### <Polymerization Example 1: Production of diene rubber (polybutadiene)>

A 10 L autoclave equipped with a stirrer was charged with 5,000 g of toluene and 810 g of 1,3-butadiene, and these materials were thoroughly stirred. Thereafter, 0.5 mol of diethylaluminum chloride and 0.6 mmol of chromium chloride pyridine complex were added, and polymerization was carried out under stirring at 60°C for 3 hours. Polymerization was subsequently terminated through addition of 100 mL of methanol. After termination of polymerization, the polymerization liquid was cooled to room temperature and then removed from the autoclave. The obtained polymerization liquid was subjected to steam coagulation and then vacuum drying at 60°C for 48 hours to yield 780 g of solid polybutadiene (BR1) as a diene rubber.

The weight-average molecular weight (Mw) of the obtained polybutadiene (BR1) was a polystyrene-equivalent value of 200,000 as measured by gel permeation chromatography (GPC) with tetrahydrofuran (THF) as a solvent.

### <Polymerization Example 2: Production of styrene-isoprene-styrene block polymer>

A 10 L autoclave equipped with a stirrer was charged with 5,000 g of cyclohexane, was heated to 65°C, and then 0.13 g of N,N,N',N'-tetramethylethylenediamine and 1.8 g of n-butyllithium were added. In addition, 1,000 g of a cyclohexane solution containing 150 g of styrene was added, and polymerization was initiated under stirring. At the point at which the polymerization conversion rate of styrene exceeded 95%, 2,000 g of a cyclohexane solution containing 1,650 g of isoprene was added, and a further 3 hours of polymerization was performed under stirring at 60°C. Next, 1,000 g of a cyclohexane solution containing 150 g of styrene was added and polymerization was continued under stirring for a further 3 hours. Polymerization was subsequently terminated through addition of 100 mL of methanol. The resultant polymerization liquid was heated to remove the solvent and yield a styrene-isoprene-styrene block polymer.

Mw of the obtained block polymer was a polystyrene-equivalent value of 82,000 as measured by GPC with THF as a solvent.

### <Adhesiveness>

A sealant composition obtained in each example or comparative example was cast onto a polypropylene plate (PP plate) of 3 mm in thickness and a nickel plate (Ni plate) of 0.2 mm in thickness by doctor blading with a gap of 100 µm so as to form a coating film. The obtained coating films were each thermally dried at 60°C for 20 minutes to form a film (thickness: 10 µm) serving as a sealant layer on each of the PP plate and the Ni plate and thereby obtain test specimens.

Next, the peel strength of each test specimen straight after production (initial peel strength) was measured by a 90° peeling method in accordance with "Testing methods of pressure-sensitive adhesive tapes and sheets" described in JIS Z 0237. Specifically, adhesive tape of 18 mm in width was first placed on a surface at the sealant layer-side of each of the test specimens, and the tape and the test specimen were affixed by passing a manual pressure bonding device (2 kg roller) back and forth twice. Next, an end of the adhesive tape was gripped, and the peel strength was measured using a tensile tester (Versatile Peel Analyzer VPA-2S produced by Kyowa Interface Science Co., Ltd.).

A larger initial peel strength indicates that the sealant layer has better adhesiveness with respect to a resin (PP) surface or metal (Ni) surface.

### <Hermetic sealing>

An insulating gasket made of polypropylene was immersed in a sealant composition obtained in each example or comparative example to form a coating film on the surface of the insulating gasket. The obtained coating film-equipped insulating gasket was thermally dried at 60°C for 20 minutes to form a sealant layer of 2 µm in thickness on the surface of the insulating gasket.

The obtained sealant layer-equipped insulating gasket was used to seal 1 g of propylene carbonate in an 18650 battery container (material: stainless steel surface plated with nickel) and thereby produce a battery.

The obtained battery was used to perform a thermal shock test at -30°C and 100°C. Specifically, treatment in which the battery was held for 30 minutes at each of temperature conditions of -30°C and 100°C was taken to be 1 cycle, and 50 cycles of this treatment were performed. Next, the battery was placed in a hermetically sealed container and was held in a 100°C constant-temperature tank for 24 hours. The hermetically sealed container was then unsealed and the presence or absence of odor of propylene carbonate was checked. The absence of odor of propylene carbonate indicates that there is no leakage from the battery and that the battery has a high level of hermetic sealing.

### (Example 1)

A sealant composition was obtained by mixing 98 parts of ethylene-propylene-diene rubber (EPDM; EP8030M produced by Mitsui Chemicals, Inc.) as a non-polar polymer, 2 parts of benzotriazole as a nitrogen-containing heterocyclic compound, and 900 parts of an organic solvent (xylene) in an impeller-equipped flask under heating at 50°C. The obtained sealant composition was used to perform various evaluations by the previously described methods. The results are shown in Table 1.

### (Examples 2 to 7 and Comparative Examples 1 to 3)

A sealant composition was obtained in the same way as in Example 1 with the exception that the types and/or amounts of various components were changed as indicated in Table 1. The obtained sealant composition was used to perform various evaluations in the same way as in Example 1. The results are shown in Table 1.

**Table 1**

| | | | | Example 1 | Example 2 | Example 3 | Example 4 | Example 5 | Example 6 | Example 7 | Comparative Example 1 | Comparative Example 2 | Comparative Example 3 |
|---|---|---|---|---|---|---|---|---|---|---|---|---|---|
| Sealant composition | Sealant | Non-polar polymer | EPDM⁽¹⁾ [parts by mass] | 98 | 90 | - | - | - | - | 99 | 100 | - | - |
| | | | Butyl rubber⁽²⁾ [parts by mass] | - | - | 95 | 99 | - | - | - | - | 100 | - |
| | | | SEBS⁽³⁾ [parts by mass] | - | - | - | - | 85 | - | - | - | - | 100 |
| | | | Butadiene rubber⁽⁴⁾ [parts by mass] | - | - | - | - | 11 | 90 | - | - | - | - |
| | | | SIS⁽⁵⁾ [parts by mass] | - | 9 | 4 | - | 3.9 | 8 | - | - | - | - |
| | | Nitrogen-containing heterocyclic compound | Benzotriazole [parts by mass] | 2 | 1 | 1 | - | - | 2 | - | - | - | - |
| | | | 2-Mercaptobenzothiazole [parts by mass] | - | - | - | - | 0.1 | - | - | - | - | - |
| | | | 1,3,5-Triazine-2-thiol [parts by mass] | - | - | - | 1 | - | - | 1 | - | - | - |
| | Organic solvent | | Xylene [parts by mass] | 900 | 900 | 900 | 900 | 900 | 900 | 900 | 900 | 900 | 900 |
| Evaluation results | Adhesiveness of sealant layer | | Initial peel strength (to Ni plate) [N/m] | 55 | 50 | 55 | 52 | 46 | 55 | 55 | 23 | 25 | 23 |
| | | | Initial peel strength (to PP plate) [N/m] | 48 | 52 | 50 | 52 | 45 | 48 | 50 | 45 | 45 | 33 |
| | Hermetic sealing of battery | | Presence of odor | No | No | No | No | No | No | No | No | No | Yes |

| | | | | | | | | | | | | | |
|---|---|---|---|---|---|---|---|---|---|---|---|---|---|
| **[0073]** (1) Ethylene-propylene-diene rubber (EPDM; EP8030M produced by Mitsui Chemicals, Inc.) (2) Butyl rubber (Butyl 268 produced by Japan Butyl Co., Ltd.) (3) Hydrogenated styrene-butadiene-styrene block copolymer (SEBS; Tuftec H1062 produced by Asahi Kasei Corporation) (4) Diene rubber (polybutadiene; weight-average molecular weight Mw: 200,000) (5) Styrene-isoprene-styrene block copolymer (SIS) | | | | | | | | | | | | | |

It can be seen from Table 1 that a sealant layer having excellent adhesiveness with respect to a metal surface can be formed using the sealants of Examples 1 to 7, which each contain a non-polar polymer and a nitrogen-containing heterocyclic compound.

In contrast, it can be seen that adhesiveness of a formed sealant layer with respect to a metal surface is poor when using the sealants of Comparative Examples 1 to 3, which do not contain a nitrogen-containing heterocyclic compound.

### INDUSTRIAL APPLICABILITY

According to the present disclosure, it is possible to provide a sealant for a non-aqueous electrolyte solution battery and a sealant composition for a non-aqueous electrolyte solution battery that can form a sealant layer having excellent adhesiveness with respect to a metal surface.

Moreover, according to the present disclosure, it is possible to provide a non-aqueous electrolyte solution battery having excellent hermetic sealing.

## Claims

1. A sealant for a non-aqueous electrolyte solution battery comprising a non-polar polymer and a nitrogen-containing heterocyclic compound.

2. The sealant for a non-aqueous electrolyte solution battery according to claim 1, wherein proportional content of the nitrogen-containing heterocyclic compound is not less than 0.01 mass% and not more than 5 mass%.

3. The sealant for a non-aqueous electrolyte solution battery according to claim 1 or 2, wherein the nitrogen-containing heterocyclic compound includes one or more selected from the group consisting of a triazole compound, a thiazole compound, and a triazine compound.

4. The sealant for a non-aqueous electrolyte solution battery according to any one of claims 1 to 3, wherein the non-polar polymer includes one or more selected from the group consisting of a diene rubber, a butyl rubber, and an ethylene-propylene-diene rubber.

5. A sealant composition for a non-aqueous electrolyte solution battery comprising: the sealant for a non-aqueous electrolyte solution battery according to any one of claims 1 to 4; and an organic solvent.

6. A non-aqueous electrolyte solution battery comprising a sealant layer formed using the sealant composition for a non-aqueous electrolyte solution battery according to claim 5.
